# EUROPÄISCHE PATENTANMELDUNG

(11) **EP 0 994 347 A2**
(43) Veröffentlichungstag der Anmeldung: **19.04.2000**
(21) Anmeldenummer: 99117533.2
(22) Anmeldetag: 04.09.1999
(51) Int. Cl.: G01N 27/49

(54) **Elektrochemischer Gas-Sensor**

(30) Priorität: 16.10.1998 DE 19847706
(71) Anmelder: VARTA Gerätebatterie GmbH, 30419 Hannover (DE)
(72) Erfinder: Ilic, Dejan, Dr., 73479 Ellwangen (DE); Holl, Konrad, Dr., 73434 Aalen-Dewangen (DE); Helmke, Joachim, 34123 Kassel (DE); Kohnke, Hans-Joachim, Dr., 34123 Kassel (DE); Winsel, August, Prof. Dr., 65779 Kelkheim (DE)
(74) Vertreter: Kaiser, Dieter Ralf, Dipl.-Ing.

(57) **Zusammenfassung**

Ein elektrochemischer Gas-Sensor zur Messung von zwei verschiedenen Gasen in Gasgemischen besitzt in einem Gehäuse eine erste Gasdiffusionselektrode für das erste Reaktionsgas, die gegenüber dem zweiten Reaktionsgas zumindest in einem ersten Potentialfenster inaktiv ist und eine zweite Gasdiffusionselektrode für das zweite Reaktionsgas, die gegenüber dem zweiten Reaktionsgas zumindest in einem zweiten Potentialfenster aktiv ist. Beide Gasdiffusionselektroden sind elektronisch voneinander getrennt, jedoch elektrolytisch mit einer reversibel belastbaren Elektrode galvanisch verbunden und besitzen Kontakte zum Anschluß von äußeren Schließungskreisen zur Einstellung der Zellenströme.

Das Gasgemisch wird den Gasdiffusionselektroden in Reihe oder parallel zugeführt. Das die Elektroden enthaltende Gehäuse besitzt insbesondere die Form einer Knopfzelle. Die reversibel belastbare Elektrode ist eine Cu/CuO-, Zn/ZnO- oder eine Wasserstoffelektrode. Die Gasdiffusionselektroden besitzen eine poröse Struktur auf Kohlenstoffbasis oder bestehen aus einer porösen Silberstruktur.

## Beschreibung

Gegenstand der Erfindung ist ein elektrochemischer Gas-Sensor in einem geschlossenen Gehäuse mit Gasöffnungen zur Messung von Gasen in Gasgemischen.

Zur Messung der Konzentration einzelner Gase in Gasgemischen sind verschiedene Verfahren bekannt. Beispielsweise ist der DE-AS 1190698 ein Verfahren zur Bestimmung von Wasserstoff oder Sauerstoff in einem Gasgemisch zu entnehmen, bei dem das Gasgemisch durch den Gasraum einer Gasdiffusionselektrode geleitet wird und dabei Elektrodenpotential und Elektrodenstrom gemessen werden, um die Konzentration des Gases zu bestimmen. Beispielsweise ist dort auch angegeben, daß mehrere Gase, wie Wasserstoff und Sauerstoff durch Verwendung je einer Diffusionselektrode für Wasserstoff und Sauerstoff nebeneinander bestimmt werden können, indem das Gasgemisch zunächst der für Wasserstoff indifferenten Sauerstoffelektrode und dann der Wasserstoffelektrode zugeführt wird.

Dem Dokument Journal of Power Sources 34 (1991), Seiten 331 - 338, A. Winsel und C. Fischer, "New apparatus for the measurement of the selfdischarge of the nickel hydroxide electrode" ist ein Verfahren zur Bestimmung des Sauerstoffgehalts mittels einer Zink/Luftzelle zu entnehmen.

Der WO 97/35186 ist ebenfalls ein Verfahren und eine Vorrichtung zur Bestimmung der Sauerstoffkonzentration zu entnehmen, bei dem eine Zink/Luftzelle als Meßelement verwendet wird.

Der Erfindung liegt die Aufgabe zugrunde, die Konzentration von zwei Gaskomponenten in einem Mischgas zu bestimmen und einen dazu geeigneten Gas-Sensor anzugeben, der einfach und kompakt aufgebaut ist und zuverlässig arbeitet.

Diese Aufgabe wird mit einem elektrochemischen Gas-Sensor, wie er in Anspruch 1 angegeben ist, gelöst. Weitere Ausgestaltungen der Erfindung sind in den Unteransprüchen angegeben.

Erfindungsgemäß wird eine einzelne elektrochemische Zelle zur Messung von zwei Gasbestandteilen in einem Gasstrom verwendet. Beispielsweise können Sauerstoff und Wasserstoff oder Sauerstoff und Lachgas in einem Gasstrom gemessen werden. Der elektrochemische Gas-Sensor kann somit beispielsweise im Zusammenhang mit einer Narkosevorrichtung Verwendung finden, um Sauerstoffkonzentrationen und Lachgaskonzentrationen zu messen oder er kann am Ausgang von Methanol-Reformern verwendet werden, um Sauerstoff- und Wasserstoffgehalt zu messen.

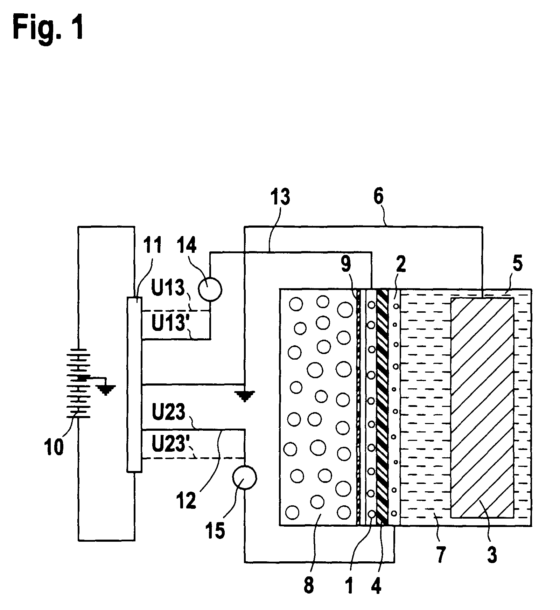

Im folgenden ist der Gegenstand der Erfindung anhand der Figuren 1 bis 4 näher erläutert.

Zur Wasserstoffversorgung von Brennstoffzellen bedient man sich häufig der autothermen Methanolreformierung. Dabei wird ein Gemisch aus Methanol, Wasser und gegebenenfalls Sauerstoff einem Reformer zugeführt, der daraus ein Gasgemisch aus Wasserstoff, Kohlendioxid, Kohlenmonoxid und Wasserdampf für die Brennstoffzellen erzeugt. Übliche Gas-Sensoren können in dieser Atmosphäre nicht selektiv Sauerstoff in der gewünschten Genauigkeit von einigen ppm nachweisen und auch nicht beide Gase, Sauerstoff und Wasserstoff, gemeinsam detektieren. Es kann daher im allgemeinen nicht beurteilt werden, ob zu wenig Sauerstoff hinzugegeben wird und der autotherme Prozeß erlischt. Auch eine zu hohe Sauerstoffdosierung kann mit üblichen Sensoren nur schwer im Ausgangsstrom nachgewiesen werden. Erfindungsgemäß ist eine gleichzeitige Messung beider Gase mit der in Figur 1 schematisch dargestellten Zelle möglich.

Der erfindungsgemäße Gas-Sensor besitzt ein Zellengehäuse 5 mit einer anodisch und kathodisch belastbaren Kupfer/Kupferoxid-Elektrode 3 dem Elektrolyten 7 und einer Kombination von Gasdiffusionselektroden. Diese Elektrodenkombination besteht aus zwei elektronisch voneinander isolierten Teilelektroden 1 und 2 mit einem zwischenliegenden Separator 4 in Form einer biporösen Schicht, die ein sich gegenseitig durchdringendes Elektrolyt- und Gasporensystem besitzt. Zum Gas 8 hin ist die Elektrodenkombination durch eine die Diffusion begrenzende Blende 9 abgeschlossen, die aus einem Isoliermaterial besteht.

Der erfindungsgemäße Gas-Sensor ist an einen elektrischen Schaltkreis angeschlossen, mit dem zwei Spannungsfenster vorgegeben werden können. Der Schaltkreis besitzt eine Gleichstromquelle 10, die an einen Spannungsteiler 11 angeschlossen ist. Der Mittelabgriff 6 des Spannungsteilers 11 ist mit der Cu/CuO-Elektrode 3 des Sensors verbunden, der Spannungsabgriff 23 mit der niedrigeren Spannung ist mit der H₂-Elektrode 2 verbunden, deren stromloses Potential mit U₂₃ bezeichnet ist. U₂₃ - U_{23'} ist also das Belastungsfenster dieser Elektrode gegen die Cu/CuO-Elektrode. Entsprechend ist der Abgriff 13 mit der höheren Spannung U₁₃ die Belastungsspannung der Sauerstoffelektrode 1, deren Arbeitsfenster durch U₁₃- U_{13'} dargestellt ist. In beiden Zuleitungen 12, 13 sind Amperemeter 14 und 15 zur Strommessung vorgesehen.

Der Gasfluß aus dem Gasraum 8 in die Kombination der Gasdiffusionselektroden 1 und 2 wird durch eine Lochblende 9 begrenzt. Ist im Gasraum Sauerstoff vorhanden, so gelangt dieser durch Diffusion oder Strömung zur Sauerstoffelektrode 1 und wird dort reduziert. Seine Konzentration ist am Meßinstrument 14 als Strom abzulesen. Dazu muß das Spannungsfenster so eingestellt werden, daß die Sauerstoffelektrode 1 im Grenzstrombereich arbeitet. Der Wasserstoff verhält sich dann wie ein Inertgas, das von dem Sauerstoff mitgeführt wird. Er gelangt so in die auf Grenzstrombelastung eingestellte Wasserstoffelektrode 2 und wird auf dem Potential der Elektrode elektrochemisch reduziert. Der dabei erzeugte Strom ist am Meßinstrument 15 ablesbar und gibt unmittelbar den Wasserstoffgehalt des zugeführten Gases an. Die zwischen den beiden Gasdiffusionselektroden 1 und 2 angeordnete Trennschicht 4 muß einerseits elektronisch isolieren, andererseits elektrolytisch leiten und die Strömung und Diffusion des Gases hinreichend gewährleisten. Diese Bedingungen sind mit bekannten biporösen Strukturen von hydrophilen und hydrophoben Pulvermischungen, beispielsweise aus Teflon und Aluminiumoxid oder lonenaustauscherharzen, zu erreichen.

Die erfindungsgemäße in Figur 1 dargestellte elektrochemische Meßzelle besitzt somit eine reversibel belastbare Elektrode 3 hoher Leistungsfähigkeit, eine erste Gasdiffusionselektrode 1 mit hoher Leistungsfähigkeit für das erste Reaktionsgas (Sauerstoffkathode), die gegenüber dem zweiten Reaktionsgas zumindest in einem ersten Potentialfenster inaktiv ist und eine zweite Gasdiffusionselektrode 2 mit hoher Leistungsfähigkeit für das zweite Reaktionsgas (Wasserstoffanode), die gegenüber dem zweiten Reaktionsgas zumindest in einem zweiten Potentialfenster aktiv ist. Die erste und zweite Gasdiffusionselektrode sind so angeordnet, daß die zweite Gasdiffusionselektrode das Reaktionsgas über die erste Gasdiffusionselektrode bezieht. Die Gasdiffusionselektroden sind elektronisch voneinander isoliert und sind elektrisch über ihre mit Elektrolyt gefüllten Porensysteme und einen Separator untereinander und mit der reversibel belastbaren Elektrode 1 verbunden.

Die Messung von Wasserstoff, neben Sauerstoff und Stickstoff, mit einer erfindungsgemäßen Dreielektrodenzelle erfolgt so, daß man als erste Gasdiffusionselektrode 1 eine poröse Sauerstoffelektrodenstruktur ohne katalytische Zusätze für die chemisorptive Spaltung des Wasserstoffs verwendet. Dagegen wird die zweite Gasdiffusionselektrode 2 mit katalytischen Zusätzen, wie Platin, Palladium, Nickel verwendet. Das Potential der Elektrode 1 wird in das Fenster des kathodischen Sauerstoffverzehrs so eingeregelt, daß der durch die Blende 9 eintretende Sauerstoff restlos reduziert wird. Sein Gehalt kann am Amperemeter 14 abgelesen werden. Damit enthält das Gas in der hydrophob/hydrophilen Schicht 4 nur noch Stickstoff und Wasserstoff. Die Gasdiffusionselektrode 2 wird in das Potentialfenster des anodischen Wasserstoffgrenzstromes eingestellt. Damit wird in der Gasdiffusionselektrode 2 der Wasserstoff restlos verbraucht. Das Amperemeter 15 zeigt somit den Wasserstoffgehalt des Gases an. Die reversible Elektrode 3 ist Gegenelektrode sowohl für die Sauerstoffkathode als auch für die Wasserstoffanode. Sie kann diese Aufgabe erfüllen, solange sie sich nicht im vollständig reduzierten oder vollständig oxidierten Zustand befindet. Falls dies auftritt, kann man sie durch Belastung gegen eine der beiden anderen Elektroden wieder in einen funktionsgemäßen Zustand überführen.

Ein weiteres Anwendungsgebiet für eine erfindungsgemäße Dreielektrodenzelle ist die Bestimmung von Sauerstoff und Lachgas N₂O in der Atemluft. Statt der Cu/CuO-Elektrode wird hier zweckmäßig eine Zinkelektrode der Art verwendet, wie sie in der Primärzellentechnik üblich ist. Geeignet ist auch eine Zinkelektrode mit Leitgerüst aus Kupfer gemäß der DE-A 4333921. Die erste Gasdiffusionselektrode 1 ist eine Sauerstoffkathode ohne Wasserstoffkatalysator und ohne Silber, die in ein Fenster >+ 0,8 V gegen die Zinkelektrode gelegt wird. Die zweite Gasdiffusionselektrode 2 ist eine poröse Silberstruktur, die in ein Fenster < +0,8 V gegen die Zinkelektrode gelegt wird. Unter diesen Umständen verhält sich das im Gasstrom enthaltene Lachgas an der Gasdiffusionselektrode 1 inert, während es an der Gasdiffusionselektrode 2 reduziert wird. Somit gibt der Strom in Meßinstrument 14 den Sauerstoffgehalt, der Strom im Meßinstrument 15 den Lachgehalt des Atemgases an.

Die Eingangsspannungen U₁₂ und U₁₃ können extern aufgeprägte Einzelspannungen sein, das Spannungsfenster kann dabei durch im Stromkreis angeordnete Dioden und/oder Zenerdioden gebildet werden. Anstelle der genannten Amperemeter können Impedanzen, insbesondere Widerstände treten, an denen ein der Gasmenge entsprechender Spannungsabfall gemessen wird. Die Dreielektroden-Sensorzelle besitzt somit einen einer Triode ähnlichen Aufbau.

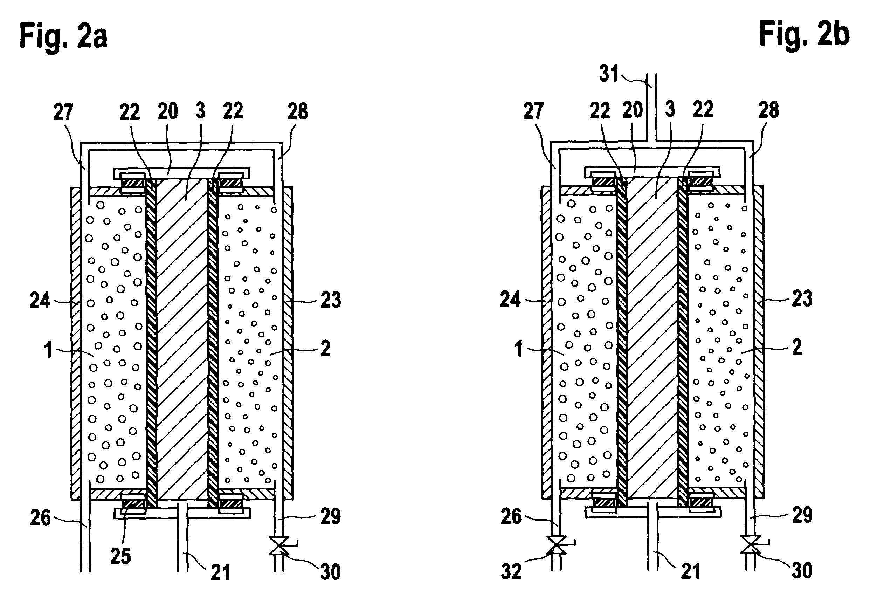

Der erfindungsgemäße Gas-Sensor kann in eine modifizierte Knopfzelle eingebaut werden. Eine solche Zelle ist in Figur 2a und Figur 2b schematisch dargestellt.

Diese Zelle besteht aus einem zylinderförmigen Gehäuseteil 20, in dem die reversible Elektrode 3 als gemeinsame Gegenkathode bzw. Gegenanode angeordnet ist. Elektrode 3 kann eine Akkumulatorelektrode sein, die weder mit H₂ noch mit O₂ reagieren muß oder auch eine reversible Wasserstoffelektrode, die über Zuleitungsrohr 21 mit Gas versorgt wird. Auf beiden Seiten der Elektrode 3 ist je ein Separator 22 angeordnet, der eine möglichst gute Sperrwirkung für Gase besitzt. Dafür sind insbesondere lonenaustauschermembranen geeignet. Der Mittelelektrode 3 ist beidseitig eine Gasdiffusionselektrode 1 bzw. 2 zugeordnet, die sich jeweils in den metallischen Halbteilen 23 und 24 befinden. Zwischen Mittelteil 20 des Gehäuses und den Halbteilen 23 und 24 sind Dichtungsringe 25 angeordnet, die der Abdichtung und der elektrischen Isolation der Teile dienen.

Gemäß Figur 2a sind die Gasdiffusionselektroden 1 und 2 strömungstechnisch so gestaltet, daß das Gas der Elektrode 1 bei 26 zugeführt wird, deren Gasraum durchströmt und bei 27 verläßt und danach bei 28 in den Gasraum der Elektrode 2 geleitet wird. Aus dieser Elektrode wird es über Anschluß 29 mit Ventil 30 geregelt, mit möglichst konstanter Strömungsgeschwindigkeit ins Freie geführt. In Fall der Messung von Sauerstoff und Lachgas in einem Mischgas wird für Gasdiffusionselektrode 1 eine Sauerstoffkathode aus insbesondere Aktivkohlepulver ohne sonstige Katalysatoren verwendet. Für die Gasdiffusionselektrode 2 wird eine poröse Silberstruktur oder eine mit Silber katalysierte Aktivkohle verwendet. In diesem Fall ist Elektrode 1 nur in der Lage, den Sauerstoff zu reduzieren, nicht jedoch das eintretende Lachgas, diese Fähigkeit besitzt jedoch die Gasdiffusionselektrode 2. Die Meßzelle wird über Rohr 26 mit dem Gasgemisch versorgt, der Gasstrom wird zunächst der Gasdiffusionselektrode 1 und dann der Gasdiffusionselektrode 2 zugeführt und tritt über das Ventil 30 als Restgas ins Freie. Wenn die Gasdiffusionselektroden 1 und 2 im Spannungsfenster der kathodischen Sauerstoffreduktion im Grenzstrombereich betrieben werden, können die Ströme zwischen Mittelelektrode 3 und Gasdiffusionselektrode 1 bzw. Gasdiffusionselektrode 2 gemessen werden. Der Strom zwischen Mittelelektrode 3 und Gasdiffusionselektrode 1 entspricht der Sauerstoffkonzentration, der Strom zwischen Mittelelektrode 3 und Gasdiffusionselektrode 2 entspricht der Lachgaskonzentration.

Gemäß Figur 2b erfolgt die Gaszufuhr zum elektrochemischen Gas-Sensor über das Rohr 31 und wird über die Leitungen 27 und 28 den Gasdiffusionselektroden 1 und 2 zugeführt, der Durchfluß kann durch an den Ausgängen 26 und 29 angeordnete Ventile 30 und 32 auf gleiche Werte eingeregelt werden. In dieser Anordnung kann beispielsweise Sauerstoff neben Wasserstoff in einem Mischgas gemessen werden. Dazu werden gleichartige Sauerstoffkathoden für die Gasdiffusionselektroden 1 und 2 verwendet, die Gasdiffusionselektrode 2 wird jedoch zusätzlich mit Platin katalysiert. Elektrode 1 kann dann lediglich Sauerstoff reduzieren, aber Wasserstoff nicht oxidieren. Dazu ist jedoch die Elektrode 2 in der Lage. Die Meßzelle wird über Rohr 31 mit dem Gasgemisch versorgt und der Gasstrom wird über Rohre 27 und 28 den Gasdiffusionselektroden parallel zugeteilt. Wenn die Gasdiffusionselektroden 1 und 2 zunächst im Spannungsfenster der kathodischen Sauerstoffreduktion mit wasserstofffreiem Gas parallel betrieben werden, können mit Hilfe der Ventile 30 und 32 die beiden Ströme zwischen reversiblen Elektrode 3 und Elektroden 1 bzw. 2 auf den gleichen Wert eingestellt werden. Wird Wasserstoff dem Mischgas zugeführt, so verhält dieser sich in der Elektrode 1 inert. Bei gleichem Sauerstoffpartialdruck bleibt somit der Strom zwischen reversibler Elektrode 3 und Diffusionselektrode 1 konstant. In Elektrode 2 wird jedoch zusätzlich der Wasserstoff anodisch verbrannt, der vom Sauerstoff gelieferte Strom wird dadurch um den doppelten Betrag der anodischen Wasserstoffoxidation verringert. Mit dem Spannungsabfall zwischen Elektrode 3 und 2 und dem Spannungsabfall zwischen Elektrode 3 und 1 können die Gaskonzentrationen durch Rechnung bestimmt, oder nach Kalibrierung abgelesen werden.

An der Dreielektrodenzelle gemäß Fig. 2b läßt sich das Meßverfahren als Differentialverfahren erläutern. In diesem Fall sind die beiden äußeren Gaselektroden 1 und 2 hinsichtlich ihres Verhaltens gegenüber Sauerstoff identisch, doch ist nur Elektrode 2 mit einem Wasserstoffkatalysator belegt. Beide werden vom gleichen Gas mit gleicher Strömungsgeschwindigkeit angeströmt und beide sind zur Mittelelektrode 3 auf die gleiche Belastungsspannung eingestellt.

Die Einstellung der Belastungsspannungen erfolgt als elektrischer Kurzschluß über gleiche Impedanzen Z₁ und Z₂, denn im Kurzschluß mit der (leistungsfähigen) Wasserstoffelektrode 3 sind die (sparsam versorgten) Sauerstoffkathoden 1 und 2 mit Sicherheit im Grenzstrombereich. Im H₂-freien Zustand liefern beide Elektroden gleiche Ströme I₁ und I₂ und damit die gleichen Spannungsabfälle an den Impedanzen bzw. Widerständen Z₁ und Z₂. Damit ist die Spannung U₁₂ praktisch gleich Null. Ist Wasserstoff im Meßgas, so wird der kathodische Strom I₂ in Elektrode 2 um den Strom kleiner, der dem Verbrauch durch die anodische Oxidation des Wasserstoffs entspricht, in der Elektrode 1 bleibt er unverändert. Damit verringert sich der Spannungsabfall an Z₂. Die Spannung U₁₂ ist ein Maß für die Wasserstoffkonzentration im Meßgas, denn die mit Nickel oder Platin katalysierte Elektrode liefert einen um den doppelten Betrag des anodischen Wasserstoffstromes verringerten Meßstrom. Der Grund hierfür ist, daß die elektrochemische Wirkung die gleiche ist, als wenn Wasserstoff und Sauerstoff rein katalytisch, d. h. stromlos reagieren würden. Eine solche Meßmethode ist besonders dann vorteilhaft, wenn es auf die Überwachung eines sonst wasserstoffreien Gases ankommt.

Im Falle der Überwachung der Atemluft eines Patienten auf Lachgas wird die Dreielektrodenzelle wie folgt modifiziert: Elektrode 1 ist eine gegenüber Lachgas unsensible Sauerstoffelektrode; ihr gegenüber verhalten sich Stickstoff und Lachgas wie Inertgase. Elektrode 2 enthält oder besteht aus Silber; sie kann daher in der Umgebung des Wasserstoffpotentials das Lachgas wie den Sauerstoff kathodisch reduzieren. Bei der Verwendung einer Wasserstoffelektrode als Mittelelektrode 3 ist auch hier die Dreielektrodenzelle eine aktive Gleichstromquelle in den beiden Stromzweigen; sie erzeugt ihren Gleichstrom aus eigener Wirkung. Will man eine andere reversibel arbeitende Mittelelektrode 3 verwenden, so kann man durch Einfügung einer Stromquelle Q in den Strompfad der Mittelelektrode die Arbeitsfenster wirksam einstellen, indem man die Impedanzen Z₁ und Z₂ aus Kombinationen von Widerständen, Zener- und /oder Gleichrichterdioden zusammensetzt.

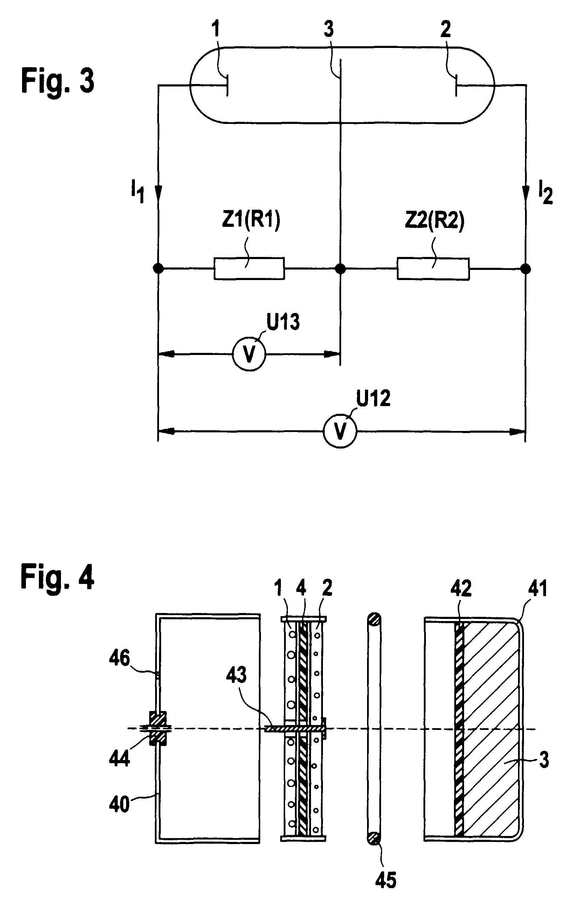

In jedem Fall lassen sich die Einzelströme und damit die Gasflüsse in den einzelnen Elektroden aus den Spannungen an den Widerständen R₁ und R₂ einfach ermitteln. So ist in Fig.3 U₁₃ = R₁*I ₁ , wobei I₁ der dem Sauerstoffgehalt im Meßgas entsprechende Strom der Elektrode 1 ist. U₁₂ = R₁*I ₁ - R₂*I ₂ = R₁*(I₁-I₂) ist ein Maß für das Lachgas im Meßgas. U₁₃/U₁₂ ist somit der relative Anteil des Lachgases im Sauerstoff.

U₁₂ ist ein Differenzsignal, also die Abweichung zwischen Elektrode 1 und 2. Als Nullmethode ist dies Verfahren sehr empfindlich und besonders gut für die Kontrolle von Prozessen geeignet. Es ist auch möglich, die Gleichspannungsquelle Q in zwei Anteile Q₁ und Q₂ zu teilen, wobei jeweils eine Spannungsquelle in der Verbindung von Mittelelektrode und Gaselektrode liegt. Dies ermöglicht auch die unsymmetrische Ausgestaltung der Spannungsfenster für die Elektroden 1 und 2.

Die in Figur 1 erläuterte Dreielektrodenzelle läßt sich auch in Form einer Knopfzelle realisieren. Eine solche Anordnung ist in Figur 4 schematisch dargestellt. Diese Knopfzelle besteht aus einem Deckel 41 und einem Becher 40. im Deckel befindet sich die reversible Elektrode 3 mit einem Separator 42. Weiterhin ist ein Elektrodeneinsatz vorhanden, der beispielsweise aus der ersten Gasdiffusionselektrode 1 gebildet ist, die in Kontakt mit dem Becher 40 steht und die elektrolytisch über die hydrophob/hydrophile Separatorschicht 4 mit der zweiten Gasdiffusionselektrode 2 verbunden ist. Diese Gasdiffusionselektrode 2 ist durch den Kontaktbolzen 43 kontaktiert, der isoliert durch den Elektrodenbecher 40 durchgeführt ist. Mit 44 ist die Durchführungsdichtung für den Kontakt 43 bezeichnet. Gegebenenfalls kann auch Elektrode 2 mit dem Zellenbecher 40 verbunden sein, während Elektrode 1 eine isolierte Durchführung durch den Zellenbecher 40 besitzt. Daneben ist das Belüftungsloch 46 für den Eintritt des Reaktionsgases in die Zelle vorgesehen. Der Dichtungsring 45 dient der Isolation und Abdichtung der Gehäuseteile.

In den erfindungsgemäßen Sensor-Zellen besteht die Sauerstoffelektrode im allgemeinen aus einer auf einem Träger aufgebrachten porösen Aktivkohleschicht, die durch PTFE hydrophobiert ist. Die Wasserstoffelektrode ist gleichartig aufgebaut, enthält aber zusätzlich einen Katalysator insbesondere einen Edelmetallkatalysator, beispielsweise aus der 8. Nebengruppe wir Platin, Palladium oder Nickel. Im Fall der Lachgasmessung wird eine Gasdiffusionselektrode verwendet, die neben Aktivkohle und Teflon Silber als Katalysator enthält, oder die als poröse Silberelektrode ausgestaltet ist. Die reversibel belastbare Elektrode kann eine Cu/CuO oder eine Zinkelektrode sein, es kann aber auch eine an sich bekannte reversibel arbeitende Wasserstoffelektrode beispielsweise eine Doppel-Skelett-Ventil-Elektrode (siehe E. Justin und A. Winsel in ,,Brennstoffzellen - Fuel Cells", Steiner-Verlag, Wiesbaden (1962), Seite 67 ff) verwendet werden.

Soweit von der konstruktiven Ausgestaltung der Sensor-Zelle notwendig, können die Gasdiffusionselektroden durch hydrophobe Membranen zu den Gasöffnungen hin begrenzt werden, um Elektrolytaustritt zu vermeiden.

## Patentansprüche

1. Elektrochemischer Gas-Sensor in einem geschlossenen Gehäuse mit Gasöffnungen zur Messung von Gasen in Gasgemischen, dadurch gekennzeichnet, daß zur Messung von zwei verschiedenen Gasen in Gasgemischen im Gehäuse eine erste Gasdiffusionselektrode für das erste Reaktionsgas, die gegenüber dem zweiten Reaktionsgas zumindest in einem ersten Potentialfenster inaktiv ist und eine zweite Gasdiffusionselektrode für das zweite Reaktionsgas, die gegenüber dem zweiten Reaktionsgas zumindest in einem zweiten Potentialfenster aktiv ist, angeordnet sind, daß beide Gasdiffusionselektroden elektronisch voneinander getrennt sind, jedoch elektrolytisch mit einer reversibel belastbaren Elektrode galvanisch verbunden sind und daß diese Elektroden Kontakte zum Anschluß von äußeren Schließungskreisen zur Einstellung der Zellenströme besitzen.

2. Elektrochemischer Gas-Sensor nach Anspruch 1, dadurch gekennzeichnet, daß das Gasgemisch den Gasdiffusionselektroden in Reihe zugeführt wird.

3. Elektrochemischer Gas-Sensor nach Anspruch 1, dadurch gekennzeichnet, daß das Gasgemisch den Gasdiffusionselektroden parallel zugeführt wird.

4. Elektrochemischer Gas-Sensor nach einem der Ansprüche 1 bis 3, dadurch gekennzeichnet, daß das die Elektroden enthaltende Gehäuse die Form einer Knopfzelle besitzt.

5. Elektrochemischer Gas-Sensor nach einem oder mehreren der Ansprüche 1 bis 4, dadurch gekennzeichnet, daß die reversibel belastbare Elektrode als Mittelelektrode ausgebildet und zwischen zwei Gasdiffusionselektroden angeordnet ist.

6. Elektrochemischer Gas-Sensor nach einem oder mehreren der Ansprüche 1 bis 5, dadurch gekennzeichnet, daß die reversibel belastbare Elektrode eine Cu/CuO-, Zn/ZnO- oder eine Wasserstoffelektrode ist.

7. Elektrochemischer Gas-Sensor nach einem oder mehreren der Ansprüche 1 bis 6, dadurch gekennzeichnet, daß eine der Gasdiffusionselektroden eine poröse Struktur auf Kohlenstoffbasis besitzt.

8. Elektrochemischer Gas-Sensor, nach einem oder mehreren der Ansprüche 1 bis 7, dadurch gekennzeichnet, daß eine der Gasdiffusionselektroden eine poröse Struktur auf Kohlenstoffbasis mit einem Edelmetallkatalysator ist.

9. Elektrochemischer Gas-Sensor nach einem oder mehreren der Ansprüche 1 bis 8, dadurch gekennzeichnet, daß eine der Gasdiffusionselektroden eine poröse Kohlenstoffstruktur mit einem Silberkatalysator ist.

10. Elektrochemischer Gas-Sensor nach einem oder mehreren der Ansprüche 1 bis 8, dadurch gekennzeichnet, daß eine der Gasdiffusionselektroden aus einer porösen Silberstruktur besteht.
